# EUROPÄISCHE PATENTANMELDUNG

(11) **EP 2 633 916 A2**
(43) Veröffentlichungstag der Anmeldung: **04.09.2013**
(21) Anmeldenummer: 13157462.6
(22) Anmeldetag: 01.03.2013
(51) Int. Cl.: B03B 9/06, C22B 1/00, C22B 7/00

(54) **Verfahren und Anlage zur Aufbereitung metallhaltigen Schrotts**

(30) Priorität: 02.03.2012 DE 102012203333
(71) Anmelder: SiCon GmbH, 57271 Hilchenbach (DE)
(72) Erfinder: Guschall, Heiner, 57271 Hilchenbach (DE)
(74) Vertreter: Sokolowski, Fabian

(57) **Zusammenfassung**

Die vorliegende Erfindung betrifft ein Verfahren zur Aufbereitung metallhaltigen Schrotts, das die nachfolgenden Schritte aufweist: Zuführen metallhaltigen Schrotts (1) zu einer Zerkleinerungseinrichtung (2); Zerkleinern des metallhaltigen Schrotts (1) in der Zerkleinerungseinrichtung (2); Trennen des zerkleinerten metallhaltigen Schrotts in eine Eisenfraktion (4) und in eine Nichteisenfraktion (5); Überführen der Eisenfraktion (4) zu einer Siebeinrichtung (6); Trennen der Eisenfraktion (4) in der Siebeinrichtung (6) in eine Eisenlangteilfraktion (7) und in eine Eisenkleinteilfraktion; Überführen der Eisenkleinteilfraktion zu einer Separationseinrichtung (8) und Trennen der Eisenkleinteilfraktion in der Separationseinrichtung (8) in gereinigten Eisenschrott (10) und in eine Restfraktion (9). Die Erfindung betrifft ferner eine Anlage, die zur Durchführung dieses Verfahrens ausgelegt ist.

## Beschreibung

Die vorliegende Erfindung betrifft ein Verfahren zur Aufbereitung metallhaltigen Schrotts gemäß dem Oberbegriff des Anspruchs 1 sowie eine Anlage zur Aufbereitung metallhaltigen Schrotts gemäß dem Oberbegriff des Anspruchs 10.

Aus dem Stand der Technik sind zahlreiche verschiedene verfahrenstechnische Anlagen bekannt, mit denen metallhaltiger Schrott aufgearbeitet werden kann. Ziel dieser Anlagen ist es regelmäßig, die unterschiedlichen Bestandteile des Schrotts voneinander zu separieren, um sie dann einer Wiederverwertung zuführen zu können. Dabei ist es von besonderem Interesse, Eisenschrott von übrigem metallhaltigem Schrott abzutrennen, um das Eisen insbesondere zu neuem Stahl wiederzuverwerten.

Derzeit auf dem Markt eingesetzte Schrottaufbereitungsanlagen, die häufig verkürzt auch als Schredderanlagen bezeichnet werden, sind regelmäßig derart aufgebaut, dass der zerkleinerte Schrott einem Windsichter zugeführt wird, um in eine flugfähige Leichtfraktion und eine nicht flugfähige Schwerfraktion getrennt zu werden. Anschließend erfolgt eine Eisenabtrennung zur Aufteilung des Schrotts in Eisenschrott sowie in eine nichteisenhaltige Schwerfraktion. Derartige Anlagen sind beispielsweise in der DE 100 53 487 A1, der DE 100 53 488 A1, der DE 100 53 491 A1 und der DE 100 53 492 A1 beschrieben.

Nachteilig hierbei ist, dass die Komplexität des aufzubereitenden Schrotts in den vergangenen Jahren mehr und mehr zugenommen hat. So werden immer mehr Verbundmaterialien und Elektronikteile eingesetzt, die zahlreiche Nichteisenmetalle enthalten und gleichermaßen in der Schwerfraktion und in der Leichtfraktion auftauchen. Um eine hohe Wiedergewinnungsrate von Eisen auf der einen Seite und Nichteisen (insbesondere Nichteisenmetalle und Kunststoffe) auf der anderen Seite zu erreichen, müssen sowohl die Schwerfraktion als auch die Leichtfraktion weiter aufbereitet werden. Dies erfolgt letztlich mit den gleichen nachfolgenden Verfahrensschritten, so dass die vorherige Auftrennung in eine Schwerfraktion und eine Leichtfraktion nicht mehr zeitgemäß und sinnvoll ist.

Ferner sind Anlagen zur Aufbereitung von Karossen- und Mischschrott bekannt, bei denen nach der Zerkleinerung des Schrotts in einem Schredder eine Langteilabscheidung und eine anschließende Eisenabscheidung erfolgt. Die Langteilabscheidung wird dabei regelmäßig derart ausgestaltet, dass der Schrott über eine Rolle abgeleitet wird, wobei dadurch unter Ausnutzung des ballistischen Effekts eine Separation des Schrotts in Partikel unterschiedlicher Größe erfolgt.

Derartige Langteilseparatoren arbeiten jedoch nicht zuverlässig. So lässt sich beobachten, dass ein längs zur Förderrichtung eines entsprechenden Förderbandes liegendes Langteil über die zur Aussortierung des Langteils vorgesehene Abwurfrolle problemlos transportiert wird, während ein quer zur Förderrichtung des entsprechenden Förderbandes liegendes Langteil in der Regel aussortiert wird. Da der derart vorsortierte Schrott in aller Regel einem Windsichter zugeführt wird, um in eine Schwerfraktion und eine Leichtfraktion getrennt zu werden, kommt es hier durch eine unzureichende Langteilseparation häufig zu Problemen im Windsichter. So setzt sich ein solcher Windsichter durch ein erhöhtes Aufkommen von Langteilen leicht zu. Dieser Problematik wurde bislang dadurch begegnet, dass der Luftkanal des Windsichters breiter ausgeführt wurde. Dies ist jedoch mit einer schlechteren Leistungsfähigkeit des Windsichters verbunden, da die Luftgeschwindigkeit im Windsichter durch den entsprechend breiter ausgeführten Luftkanal herabgesetzt wird.

Der vorliegenden Erfindung liegt die Aufgabe zugrunde, die vorgenannten aus dem Stand der Technik bekannten Nachteile zu überwinden und ein Verfahren bereitzustellen, das zur effizienten Aufbereitung metallhaltigen Schrotts geeignet ist. Ferner soll eine Anlage bereitgestellt werden, die zur Durchführung eines entsprechenden Verfahrens geeignet ist. Diese Aufgabe wird mit einem Verfahren mit den Merkmalen des Anspruchs 1 und einer Anlage mit den Merkmalen des Anspruchs 10 gelöst.

Ein derartiges Verfahren zur Aufbereitung metallhaltigen Schrotts kann vorzugsweise zur Aufbereitung von Karossen- und Mischschrott eingesetzt werden. Es zeichnet sich durch die nachfolgend erläuterten Schritte aus. Zunächst wird metallhaltiger Schrott zu einer Zerkleinerungseinrichtung (Schreddereinrichtung) zugeführt. Dies kann beispielsweise über einen Kran oder über ein Förderband geschehen. Anschließend wird der metallhaltige Schrott in der Zerkleinerungseinrichtung zerkleinert bzw. geschreddert. Der derart zerkleinerte metallhaltige Schrott wird anschließend in eine Eisenfraktion und in eine Nichteisenfraktion getrennt. Diese Trennung erfolgt typischerweise unter Ausnutzung der magnetischen Eigenschaften von Eisen. So können beispielsweise Trommelmagneten oder Magnetrollen eingesetzt werden, um eisenhaltigen Schrott von nicht-eisenhaltigem Schrott zu separieren. Dieser Trennschritt wird auch als Eisenseparation bezeichnet.

Nachfolgend wird die Eisenfraktion zu einer Siebeinrichtung überführt. Diese Überführung kann beispielsweise durch ein Förderband bewerkstelligt werden. In der Siebeinrichtung wird die Eisenfraktion nun in eine Eisenlangteilfraktion und in eine Eisenkleinteilfraktion getrennt. Vorzugsweise werden als Langteile solche Schrottteile betrachtet, die eine Länge von mehr als 20 cm, insbesondere mehr als 25 cm, insbesondere mehr als 30 cm und ganz besonders mehr als 35 cm aufweisen. Die Eisenkleinteilfraktion besteht entsprechend aus Partikeln, die eine geringere Länge als die Eisenlangteile aufweisen. Mit anderen Worten handelt es sich bei der Eisenkleinteilfraktion um das Unterkorn des Siebungsvorgangs. Die Siebeinrichtung ist dabei derart ausgestaltet, dass sie Eisenlangteile zurückhält und Eisenkleinteile durchlässt. Einsengrobteile, die nicht die Länge eines Eisenlangteils aufweisen, werden von der Siebeinrichtung nicht zurückgehalten, sondern sind Teil der Eisenkleinteilfraktion.

Nachfolgend wird die Eisenkleinteilfraktion zu einer Separationseinrichtung überführt. Dies erfolgt vorzugsweise durch ein Förderband. Alternativ kann die Siebeinrichtung auch derart mit der Separationseinrichtung verbunden sein, dass die Eisenkleinteilfraktion direkt aus der Siebeinrichtung in die Separationseinrichtung gelangt. Abschließend wird die Eisenkleinteilfraktion in der Separationseinrichtung in gereinigten Eisenschrott und in eine Restfraktion aufgetrennt.

Durch diese Verfahrensabfolge, die sich von den bislang auf dem Markt bekannten Verfahrensabfolgen unterscheidet, wird eine effiziente Wiedergewinnung eisenhaltigen Schrotts gewährleistet und eine geringe Ausfallrate der einzelnen zur Durchführung des Verfahrens benötigten Einrichtungen gewährleistet. Insbesondere wird ein Verstopfen der Separationseinrichtung durch die vorherige effiziente Langteilabscheidung in der Siebeinrichtung verhindert. Ferner ist es mit einem derartigen Verfahren nicht mehr erforderlich, eine Schwerfraktion und eine Leichtfraktion gleichermaßen einer Eisenabscheidung zuzuführen. Vielmehr lassen sich durch eine frühzeitige Eisenseparation im Aufbereitungsverfahren Wiederholungen bestimmter Verfahrensschritte vermeiden.

Die abgetrennte Nichteisenfraktion wird - sofern der aufzubereitende metallhaltige Schrott aus der Automobilindustrie stammt - häufig auch als Fahrzeugschredderrest bezeichnet, was dem Fachmann auch unter der Abkürzung ASR für den englischen Begriff "Automotive Shredder Residue" geläufig ist.

Mit anderen Worten ausgedrückt, betrifft das erfindungsgemäße Verfahren die Reinigung bzw. sortenreiche Sortierung von bereits geschreddertem Eisenschrott mittels einer spezifischen Kombination aus Siebung und Sichtung.

Da Zerkleinerungseinrichtungen häufig einen sehr unregelmäßigen Ausstoß an zerkleinertem Material aufweisen, kommt es häufig zur Überladung einzelner verfahrenstechnischer Einrichtungen, wie etwa der Separationseinrichtung. Um dem vorzubeugen, werden in einer bevorzugten Ausgestaltung des vorliegenden Verfahrens der zerkleinerte metallhaltige Schrott vor der Eisenseparation und/oder die Eisenfraktion vor ihrem Einbringen in die Siebeinrichtung gewogen. Auf diese Weise lässt sich feststellen, zu welchem Zeitpunkt welche Mengen an metallhaltigem Schrott oder an Eisenschrott der jeweiligen verfahrenstechnischen Einheit zugeführt würden, wenn keine Anpassung sonstiger Parameter erfolgt. Durch eine Anpassung der Fördermengen derjenigen Überführungseinrichtungen, die den zerkleinerten metallhaltigen Schrott aus der Zerkleinerungseinrichtung zur Eisenseparation, die Eisenfraktion zur Siebeinrichtung und/oder die Eisenkleinteilfraktion von der Siebeinrichtung zur Separationseinrichtung überführen, kann jedoch gewährleistet werden, dass die der Eisenseparation, der Siebeinrichtung und/oder der Separationseinrichtung zugeführten Schrottmengen stets auf dem gleichen Niveau verbleiben. Werden als Zuführeinrichtungen beispielsweise Förderbänder eingesetzt, ist es denkbar, die Geschwindigkeit dieser Förderbänder regelbar auszugestalten. Wird viel zerkleinerter Schrott der Eisenseparation zugeführt oder wird viel eisenhaltiger Schrott in die Siebeinrichtung überführt, kann die Förderbandgeschwindigkeit entsprechend heruntergeregelt werden. Dadurch wird die Menge der Eisenkleinteilfraktion, die der Separationseinrichtung zugeführt wird, letztlich auf einem konstanten Niveau gehalten, was einer Verstopfung der Separationseinrichtung entgegenwirkt.

Vorzugsweise wird die im Rahmen der Langteilseparation gebildete Eisenlangteilfraktion wieder zu der Zerkleinerungseinrichtung zurückgeführt, um dort erneut zerkleinert zu werden. Auf diese Weise können Langteile, die im ersten Zerkleinerungsvorgang nicht ausreichend zerkleinert wurden, dennoch derart aufbereitet werden, dass auch sie den weiteren Aufbereitungsschritten zugeführt werden können, um so die Eisenausbeute weiter zu erhöhen.

In einer weiteren Ausgestaltung des Verfahrens wird die Restfraktion mit der Nichteisenfraktion vereinigt, um dann einer gemeinsamen weiteren Aufbereitung unterzogen zu werden. Hierfür sind aus dem Stand der Technik zahlreiche Verfahren bekannt.

In einer weiteren Verfahrensausgestaltung ist die Siebeinrichtung als Vibrationssieb (Schwingsieb) und/oder als Kaskadensieb ausgestaltet. Besonders bevorzugt ist dabei ein vibrierendes Kaskadensieb. Durch eine entsprechende Vibration wird die zu trennende Eisenfraktion umgewälzt und aufgelockert. Durch die Ausgestaltung der Siebeinrichtung als Kaskadensieb wird zudem eine zwei- oder mehrfache Siebung der Eisenfraktion ermöglicht. Dadurch können auf besonders effektive Weise Langteile abgetrennt werden, ohne dass es zu einer frühzeitigen Verstopfung der Siebeinrichtung kommt. Auch wird auf diese Weise verhindert, dass Langteile, die in Längsrichtung zu den Löchern des entsprechenden Siebes ausgerichtet sind, durch das Sieb hindurchfallen, obwohl sie eigentlich hätten ausgesiebt werden sollen. Denn wenn zwei zueinander versetzte Siebebenen eines Kaskadensiebes zum Einsatz kommen, sinkt die Wahrscheinlichkeit, dass ein Langteil durch beide Siebebenen "hindurchrutscht", auf ein vernachlässigbar geringes Maß. Unabhängig von der konkreten Ausgestaltung der Siebeinrichtung ermöglicht diese eine weitaus bessere Langteilseparation als ballistische Verfahren, die gemäß dem Stand der Technik eingesetzt werden.

Vorzugsweise wird die Eisenkleinteilfraktion derart in die Separationseinrichtung eingebracht, dass eine Falschluftzufuhr zu der Separationseinrichtung minimiert wird. Dies ist insbesondere dann von Vorteil, wenn die Separationseinrichtung eine auf Lufttrennung basierende Separationseinrichtung wie etwa ein Windsichter ist. Denn die Effizienz eines solchen Windsichters wird durch Falschluftzufuhr (also eine Luftzufuhr in den Luftkanal, die unabhängig von der eigentlichen Luftzufuhr in den Luftkanal des Windsichters erfolgt) signifikant herabgesetzt. Durch geeignete Dichtmittel wie etwa einen Lamellenvorhang ist es möglich, dass die Eisenkleinteilfraktion von einer Zuführeinrichtung wie etwa einem Förderband zur Separationseinrichtung transportiert werden kann und in die Separationseinrichtung eingebracht werden kann, die Falschluftzufuhr an dieser Einbringstelle jedoch gleichzeitig signifikant reduziert wird.

Um die Qualität des gereinigten Eisenschrotts noch weiter zu erhöhen, kann der gereinigte Eisenschrott in einem nachfolgenden Verfahrensschritt in eine kupferreiche und in eine kupferarme Fraktion getrennt werden. Dies kann beispielsweise durch eine Röntgenfluoreszenzanalyse erfolgen. Als kupferreiche Fraktion wird dabei eine Fraktion betrachtet, die einen Kupfergehalt von mehr als rund 0,2 % aufweist. Demgegenüber wird gereinigter Eisenschrott mit einem Kupfergehalt von weniger als rund 0,2 % als kupferarme Fraktion betrachtet. Ein derartiger Kupfergehalt von weniger als etwa 0,2 % ist für die meisten Stahlwerke vollkommen ausreichend, um eine gute Wiederverwertbarkeit dieser Eisenschrottfraktion zu Stahl zu gewährleisten. Mitunter können jedoch noch geringere Kupferwerte (bis zu ≤ 0,1 %) gefordert werden. Alle Prozentangaben sind als Massenprozent zu verstehen.

Vorzugsweise werden der gereinigte Eisenschrott oder die kupferarme Fraktion des gereinigten Eisenschrotts in einem weiteren nachfolgenden Verfahrensschritt mittels eines Analysators zur Bestimmung der Schrottqualität analysiert. Durch diese optionale zusätzliche Qualitätskontrolle kann sichergestellt werden, dass die Zielvorgaben beispielsweise hinsichtlich des Kupfergehaltes tatsächlich eingehalten werden. Je nach Ausgestaltung des Analysators sind dabei beliebige Parameter des Schrotts bzw. der Schrottqualität analysierbar. Vorzugsweise wird der Analysator in die Steuerung der gesamten zur Durchführung des Verfahrens eingesetzten Anlage integriert.

In einer weiteren bevorzugten Ausgestaltung des Verfahrens ist der Analysator dafür vorgesehen und eingerichtet, ein Warnsignal zu erzeugen, wenn die ermittelte Schrottqualität von einem vorgebbaren Wert der Schrottqualität abweicht. Dieses Warnsignal kann beispielweise als auditives, visuelles oder audio-visuelles Signal ausgestaltet sein. Dieses Signal kann beispielsweise über eine auf einem Bildschirm bereitgestellte Information umgesetzt werden. Vorzugsweise wird dieses Signal bzw. diese Information an diejenigen Personen ausgegeben, die mit der Beschickung der Zerkleinerungseinrichtung (also etwa ein Kranfahrer) und/oder mit dem Betrieb der Zerkleinerungseinrichtung (also beispielsweise ein Schredderfahrer) beschäftigt sind. Auf diese Weise kann die Beschickung der Zerkleinerungseinrichtung variiert werden, um wieder gereinigten Eisenschrott zu produzieren, der den Qualitätsanforderungen entspricht. Dies kann beispielsweise über die Auswahl der der Zerkleinerungseinrichtung zugeführten Schrottqualität geschehen.

In einer weiteren Verfahrensausgestaltung wird der gereinigte Eisenschrott oder die kupferarme Fraktion des gereinigten Eisenschrott, dessen oder deren Schrottqualität nicht einem vorgebbaren Wert der Schrottqualität entspricht, von gereinigtem Eisenschrott oder der kupferarmen Fraktion des gereinigten Eisenschrotts, dessen oder deren Schrottqualität dem vorgebbaren Wert der Schrottqualität entspricht, separiert. Dies ist besonders vorteilhaft dann umsetzbar, wenn der Analysator in die Gesamtanlagensteuerung integriert ist. Eine entsprechende Fördereinrichtung (wie etwa ein Austragsband), die den gereinigten Eisenschrott bzw. die kupferarme Fraktion des gereinigten Eisenschrotts in einen Container oder zu einem Ablageplatz überführt, kann bei Abweichungen der Schrottqualität vom vorgegebenen Sollwert vorzugsweise derart umgeschwenkt werden, dass sie den gereinigten Eisenschrott bzw. die kupferarme Fraktion des gereinigten Eisenschrotts, die die vorgegebene Schrottqualität nicht erreicht, in einen anderen Container bzw. an eine andere Ablageposition überführt. Anschließend kann diese gereinigte Schrottfraktion minderer Qualität einer erneuten Aufbereitung zugeführt werden. Auf diese Weise wird die Gesamtschrottqualität signifikant erhöht, da so verhindert wird, dass große Mengen Schrott guter Qualität durch geringe Menge Schrott geringerer Qualität verunreinigt werden.

Die der Erfindung zugrunde liegende Aufgabe wird auch durch eine Anlage zur Aufbereitung metallhaltigen Schrotts mit den Merkmalen des Anspruchs 10 gelöst. Eine derartige Anlage weist eine Zerkleinerungseinrichtung zum Zerkleinern metallhaltigen Schrotts auf. Dieser Zerkleinerungseinrichtung nachgeordnet ist eine Eisenabtrenneinrichtung zum Trennen des zerkleinerten metallhaltigen Schrotts in eine Eisenfraktion und in eine Nichteisenfraktion. Der Eisenabtrenneinrichtung nachgeordnet ist ferner eine Siebeinrichtung zum Trennen der Eisenfraktion in eine Eisenlangteilfraktion und in eine Eisenkleinteilfraktion. Dieser Siebeinrichtung ist schließlich eine Separationseinrichtung nachgeordnet, die zum Trennen der Eisenkleinteilfraktion in gereinigten Eisenschrott und in eine Restfraktion dient. Die vorgenannten Einrichtungen sind vorzugsweise unmittelbar miteinander verbunden - gegebenenfalls unter Zwischenschaltung entsprechender Überführungseinrichtungen, wie etwa Förderbänder.

In einer bevorzugten Ausgestaltung der Anlage ist die Separationseinrichtung als Windsichter ausgestaltet. Der Windsichter wird dabei vorzugsweise als Steigrohrsichter bzw. Zickzacksichter ausgeführt. Auf diese Weise ist es möglich, dass die Eisenkleinteilfraktion in einem oberen Bereich des Windsichters in diesen eingebracht wird und der gereinigte Eisenschrott unten aus dem Windsichter entnommen werden kann, während die Restfraktion durch den im Windsichter vorherrschenden Luftstrom nach oben ausgetragen wird. Ein Zickzacksichter weist dabei gegenüber einem Steigrohrsichter in allgemein bekannter Funktionsweise eine bessere Trennung der zu trennenden Substanzen auf.

Die Restfraktion umfasst insbesondere losen Abfall und Staub und stellt eine Leichtfraktion dar.

Vorzugsweise sind die Siebeinrichtung, eine optionale Überführungseinrichtung, welche zwischen der Siebeinrichtung und der Separationseinrichtung angeordnet sein kann, und die Separationseinrichtung als verfahrenstechnische Einheit ausgestaltet. Mit anderen Worten, handelt es sich hierbei um eine modulartige Ausgestaltung von Siebeinrichtung und Sichter (und gegebenenfalls Überführungseinrichtung). Wenn die Siebeinrichtung beispielsweise als zwei- oder mehrstufiges Kaskadensieb ausgeführt ist, ist es denkbar, die letzte Siebebene innerhalb des Sichters auszuführen, um ein besonders effizientes Einbringen der Eisenkleinteilfraktion aus der Siebeinrichtung in die Separationseinrichtung zu ermöglichen. Auf diese Weise ist es zudem möglich, die Menge der in die Separationseinrichtung zugeführten Falschluft zu reduzieren. Sofern die Siebeinrichtung jedoch vollständig außerhalb der Separationseinrichtung angeordnet ist, ist in aller Regel eine Überführungseinrichtung erforderlich, um die aus dem Sieb austretende Eisenkleinteilfraktion in die Separationseinrichtung zu überführen.

Wenn eine derartige Überführungseinrichtung zum Überführen der Eisenkleinteilfraktion in die Separationseinrichtung erforderlich ist, ist diese Überführungseinrichtung vorzugsweise unter Verwendung eines Dichtmittels mit der Separationseinrichtung verbunden. Auf diese Weise wird die Falschluftzufuhr in die Separationseinrichtung reduziert, so dass die Effizienz der Separationseinrichtung nicht gemindert wird. Dieses Dichtmittel kann beispielsweise als Lamellenvorhang ausgestaltet sein, der von den in die Separationseinrichtung einzubringenden Partikeln, wie den Partikeln der Eisenkleinteilfraktion, beiseite geschoben werden kann, dabei jedoch nur soviel Raum freigibt, wie dies zum Einbringen der Eisenkleinteilfraktion in die Separationseinrichtung erforderlich ist.

Vorzugsweise weist die Separationseinrichtung - insbesondere dann, wenn sie als Windsichter ausgestaltet ist - einen Luftkanal auf, dessen Breite einstellbar ist. Auf diese Weise lässt sich die Separationseffizienz der Separationseinrichtung an die jeweils zu separierende Eisenkleinteilfraktion anpassen. Wie bereits oben erwähnt, ist die Separationsleistung umso besser, je enger der Luftkanal in der Separationseinrichtung ist. Umgekehrt ist das Risiko einer Verstopfung des Luftkanals der Separationseinrichtung umso höher, je enger dieser Kanal ist. Durch die Ausgestaltung der Separationseinrichtung mit einer variablen Breite des Luftkanals lässt sich hier stets eine optimale Anpassung an die gestellten Separationsanforderungen ermöglichen.

In einer weiteren Ausgestaltung ist mindestens eine der optional vorgesehenen Überführungseinrichtungen derart ausgestaltet, dass eine von ihr pro Zeiteinheit beförderte Materialmenge einstellbar ist. Handelt es sich bei der Überführungseinrichtung beispielsweise um ein Förderband, wäre dies unter anderem durch eine Einstellung der Geschwindigkeit des Förderbandes bewerkstelligbar. Auf diese Weise kommt der Überführungseinrichtung eine Pufferfunktion zu, um "Spitzen" oder "Täler" der zu separierenden Materialmenge abzufedern. Durch eine derart variable Überführungseinrichtung wird die Gefahr der Verstopfung des Luftkanals der Separationseinrichtung signifikant reduziert.

Eine derartige Einstellbarkeit der beförderten Materialmenge pro Zeiteinheit ist in einer weiteren Variante nicht nur für die Überführungseinrichtung, die zwischen der Siebeinrichtung und der Separationseinrichtung vorgesehen sein kann, sondern auch für andere Überführungseinrichtungen der gesamten Anlage vorstellbar. Insbesondere sind sämtliche Überführungseinrichtungen, die den aufzubereitenden Schrott von einer verfahrenstechnischen Einrichtung der Anlage zu einer anderen verfahrenstechnischen Einrichtung der Anlage überführen, derart variabel in Bezug auf die von ihnen beförderte Materialmenge ausgelegt.

Bevorzugte Ausgestaltungen des Verfahrens sind in analoger Weise auch auf die beanspruchte Anlage übertragbar. Gleichermaßen sind bevorzugte Ausgestaltungen der Anlage in analoger Weise auf das beanspruchte Verfahren übertragbar.

Funktionsweisen und Details der vorliegenden Erfindung werde nun anhand von Ausführungsbeispielen und Zeichnungen näher erläutert. Es zeigen:
- Fig. 1: ein Flussdiagramm zur schematischen Übersicht über die einzelnen Verfahrensschritte eines Ausführungsbeispiels des Verfahrens zur Aufbereitung metallhaltigen Schrotts und
- Fig. 2: eine Seitenansicht einer Sieb-Sichter-Einheit eines Ausführungsbeispiels einer Anlage zur Aufbereitung metallhaltigen Schrotts.

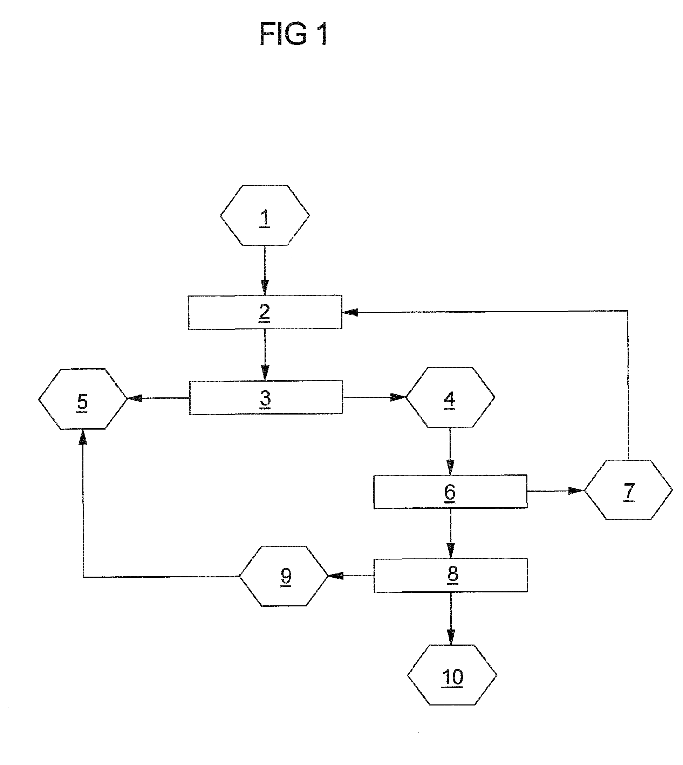

Die Figur 1 zeigt in schematischer Darstellung die einzelnen Verfahrensschritte eines Ausführungsbeispiels eines Verfahrens zur Aufbereitung metallhaltigen Schrotts. Zunächst wird metallhaltiger Schrott 1 einem Schredder 2 als Zerkleinerungseinrichtung zugeführt. In dem Schredder 2 erfolgt eine Zerkleinerung des metallhaltigen Schrotts zu zerkleinertem metallhaltigen Schrott. Dieser wird dann in einem Eisenabscheider 3 in eine Eisenfraktion 4 und eine Nichteisenfraktion 5 aufgetrennt. Die Eisenfraktion 4 wird anschließend einem Kaskaden-Schwingsieb 6 zugeführt, in dem eine Langteilseparation erfolgt. Während von dem Kaskaden-Schwingsieb 6 zurückgehaltene Langteile 7 wieder dem Schredder 2 zu einer erneuten Zerkleinerung zugeführt werden, wird die verbleibende Eisenkleinteilfraktion in einen Windsichter 8 als Separationseinrichtung eingetragen. Im Windsichter 8 wird die Eisenkleinteilfraktion in eine Leichtfraktion 9 als Restfraktion und in gereinigten Eisenschrott 10 aufgetrennt. Der gereinigte Eisenschrott 10 kann dann in gewünschter Weise weiter aufbereitet oder aber direkt einer Wiederverwertung zugeführt werden.

Die Leichtfraktion 9 wird mit der Nichteisenfraktion 5 vereinigt und in einem für diese Materialien geeigneten Verfahren weiter aufbereitet.

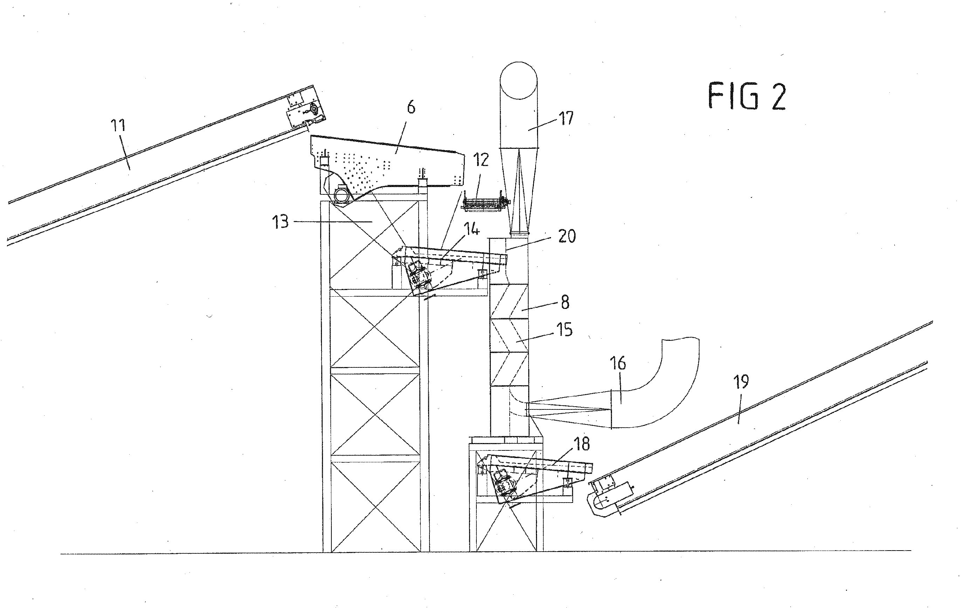

Die Figur 2 zeigt eine Sieb-Sichter-Kombination eines Ausführungsbeispiels einer Anlage zur Aufbereitung metallhaltigen Schrotts. Zunächst wird die Eisenfraktion metallhaltigen Schrotts, der zuvor bereits zerkleinert und einer Eisenseparation unterzogen wurde, auf einem ersten Förderband 11 zu einem Kaskaden-Schwingsieb 6 gefördert. Das Kaskaden-Schwingsieb 6 weist in diesem Ausführungsbeispiel zwei Siebebenen auf, die untereinander angeordnet sind. Langteile, welche aus der Eisenfraktion durch das Kaskaden-Schwingsieb 6 ausgesiebt werden, gelangen auf ein zweites Förderband 12. Dieses zweite Förderband 12 bringt die Langteile wieder zurück zu einem in der Figur 2 nicht dargestellten Schredder. Die das Sieb passierende Eisenkleinteilfraktion gelangt über eine Schütte 13 auf ein drittes Förderband 14. Dieses dritte Förderband 14 dient als Überführungseinrichtung zum Überführen der Eisenkleinteilfraktion zu einem Windsichter 8 als Separationseinrichtung. Der Windsichter 8 ist als senkrecht angeordneter Zickzacksichter ausgeführt und weist in seinem Inneren einen zickzack-förmig verlaufenden Luftkanal 15 auf. In diesen Luftkanal wird von unten aus einer Luftzuführeinrichtung 16 Luft eingebracht. Diese Luft verlässt den Windsichter 8 an dessen oberem Ende durch eine entsprechende Luftabsaugeinrichtung 17. Die Luftzufuhreinrichtung 16 und die Luftabsaugeinrichtung 17 können derart miteinander verbunden sein, dass die Luft kontinuierlich durch den Windsichter 8 umgewälzt wird (Umluftbetrieb). Dabei ist es lediglich erforderlich, eine im Luftkanal 15 des Windsichters 8 nach oben steigende Leichtfraktion aus der Eisenkleinteilfraktion von der umgewälzten Luft abzutrennen. Darüber hinaus kann ein Staubfilter vorgesehen sein, um gleichzeitig eine Entstaubung der Eisenkleinteilfraktion bzw. der umgewälzten Luft zu erreichen.

Am unteren Ende des Luftkanals 15 tritt gereinigter Eisenschrott aus dem Windsichter 8 aus und wird über ein viertes Förderband 18 auf ein Austragsband 19 überführt. Auf dem Austragsband 19 befindet sich also gereinigter Eisenschrott, der dann weiteren Analysen, einer weiteren Aufbereitung oder direkt einer Widerverwertung zugeführt werden kann.

Das dritte Förderband 14 ist derart in den Luftkanal 15 des Windsichters 8 eingebracht, dass eine Falschluftzufuhr in den Luftkanal 15 im Bereich der Verbindung des dritten Förderbandes 14 mit dem Luftkanal 15 auf ein Minimum reduziert ist. So ist im vorliegenden Ausführungsbeispiel ein Lamellenvorhang vorgesehen, der eine Öffnung 20 im Luftkanal 15 im Wesentlichen luftdicht verschließt, solange keine Partikel der Eisenkleinteilfraktion in den Luftkanal 15 des Windsichters 8 eingebracht werden. Befinden sich hingegen Partikel der Eisenkleinteilfraktion auf dem dritten Förderband 14, schieben diese den Lamellenvorhang etwas zur Seite, so dass die Öffnung 20 leicht freigegeben wird, wodurch die Partikel dann in den Luftkanal 15 des Windsichters 8 eingebracht werden können. Dabei wird die Menge der gleichzeitig eingetragenen Luft an dieser Stelle jedoch auf niedrigem Niveau gehalten. Auf diese Weise wird gewährleistet, dass der überwiegende Anteil von im Luftkanal 15 zirkulierender Luft durch die Luftzufuhr 16 bereitgestellt wird und nicht durch die Öffnung 20 zusätzlich als Falschluft in den Luftkanal 15 eingetragen wird.

## Patentansprüche

1. Verfahren zur Aufbereitung metallhaltigen Schrotts, **gekennzeichnet durch** die nachfolgenden Schritte:
a) Zuführen metallhaltigen Schrotts (1) zu einer Zerkleinerungseinrichtung (2),
b) Zerkleinern des metallhaltigen Schrotts (1) in der Zerkleinerungseinrichtung (2),
c) Trennen des zerkleinerten metallhaltigen Schrotts in eine Eisenfraktion (4) und in eine Nichteisenfraktion (5),
d) Überführen der Eisenfraktion (4) zu einer Siebeinrichtung (6),
e) Trennen der Eisenfraktion (4) in der Siebeinrichtung (6) in eine Eisenlangteilfraktion (7) und in eine Eisenkleinteilfraktion,
f) Überführen der Eisenkleinteilfraktion zu einer Separationseinrichtung (8) und
g) Trennen der Eisenkleinteilfraktion in der Separationseinrichtung (8) in gereinigten Eisenschrott (10) und in eine Restfraktion (9).

2. Verfahren nach Anspruch 1, **dadurch gekennzeichnet, dass** der zerkleinerte metallhaltige Schrott vor Schritt c) und/oder die Eisenfraktion (4) vor ihrem Einbringen in die Siebeinrichtung (6) gewogen werden.

3. Verfahren nach Anspruch 1 oder 2, **dadurch gekennzeichnet, dass** die Eisenlangteilfraktion (7) wieder zur Zerkleinerungseinrichtung (2) überführt wird, um dort erneut zerkleinert zu werden.

4. Verfahren nach einem der vorherigen Ansprüche, **dadurch gekennzeichnet, dass** die Siebeinrichtung (6) als Vibrationssieb und/oder Kaskadensieb ausgestaltet ist.

5. Verfahren nach einem der vorherigen Ansprüche, **dadurch gekennzeichnet, dass** die Eisenkleinteilfraktion derart in die Separationseinrichtung (8) eingebracht wird, dass eine Falschluftzufuhr zu der Separationseinrichtung (8) minimiert wird.

6. Verfahren nach einem der vorherigen Ansprüche, **dadurch gekennzeichnet, dass** in einem weiteren Verfahrensschritt der gereinigte Eisenschrott (10) in eine kupferreiche und eine kupferarme Fraktion getrennt wird.

7. Verfahren nach einem der vorherigen Ansprüche, **dadurch gekennzeichnet, dass** der gereinigte Eisenschrott (10) oder die kupferarme Fraktion des gereinigten Eisenschrotts mittels eines Analysators zur Bestimmung der Schrottqualität analysiert wird.

8. Verfahren nach Anspruch 7, **dadurch gekennzeichnet, dass** der Analysator dafür vorgesehen und eingerichtet ist, ein Warnsignal zu erzeugen, wenn die ermittelte Schrottqualität von einem vorgebbaren Wert der Schrottqualität abweicht.

9. Verfahren nach Anspruch 7 oder 8, **dadurch gekennzeichnet, dass** der gereinigte Eisenschrott (10) oder die kupferarme Fraktion des gereinigten Eisenschrotts, dessen oder deren Schrottqualität nicht einem vorgebbaren Wert der Schrottqualität entspricht, von gereinigtem Eisenschrott (10) oder der kupferarmen Fraktion des gereinigten Eisenschrotts, dessen oder deren Schrottqualität einem vorgebbaren Wert der Schrottqualität entspricht, getrennt wird.

10. Anlage zur Aufbereitung metallhaltigen Schrotts, **gekennzeichnet durch**
● eine Zerkleinerungseinrichtung (2) zum Zerkleinern metallhaltigen Schrotts (1),
● eine der Zerkleinerungseinrichtung (2) nachgeordnete Eisenabtrenneinrichtung zum Trennen des zerkleinerten metallhaltigen Schrotts in eine Eisenfraktion (4) und in eine Nichteisenfraktion (5),
● eine der Eisenabtrenneinrichtung nachgeordnete Siebeinrichtung (6) zum Trennen der Eisenfraktion (4) in eine Eisenlangteilfraktion (7) und in eine Eisenkleinteilfraktion,
● einer der Siebeinrichtung (6) nachgeordnete Separationseinrichtung (8) zum Trennen der Eisenkleinteilfraktion in gereinigten Eisenschrott (10) und in eine Restfraktion (9).

11. Anlage nach Anspruch 10, **dadurch gekennzeichnet, dass** die Siebeinrichtung (6) und die Separationseinrichtung (8) als verfahrenstechnische Einheit ausgestaltet sind.

12. Anlage nach Anspruch 10 oder 11, **dadurch gekennzeichnet, dass** sie zusätzlich eine der Siebeinrichtung (6) nachgeordnete Überführungseinrichtung (14) zum Überführen der Eisenkleinteilfraktion zu der Separationseinrichtung (8) aufweist.

13. Anlage nach Anspruch 12, **dadurch gekennzeichnet, dass** die Überführungseinrichtung (14) zusammen mit der Siebeinrichtung (6) und der Separationseinrichtung (8) eine verfahrenstechnische Einheit bildet.

14. Anlage nach Anspruch 12 oder 13, **dadurch gekennzeichnet, dass** die Überführungseinrichtung (14) mit der Separationseinrichtung (8) unter Verwendung eines Dichtmittels zur Reduzierung einer Falschluftzufuhr in die Separationseinrichtung (8) verbunden ist.

15. Anlage nach einem der Ansprüche 10 bis 14, **dadurch gekennzeichnet, dass** die Separationseinrichtung (8) einen Luftkanal (15) aufweist, dessen Breite einstellbar ist.
